# FASCICULE DE BREVET EUROPEEN

(11) **EP 0 433 160 B1**
(45) Date de publication et mention de la délivrance du brevet: **08.03.1995**
(21) Numéro de dépôt: 90403523.5
(22) Date de dépôt: 11.12.1990
(51) Int. Cl.: G02B 27/00, G02B 5/06

(54) **Equipement optoélectronique aéroporté, d'identification et de localisation, avec hublot à facettes compensé**
Im Flugzeug eingebaute optoelektronische Geräte zur Identifizierung und Ortung mit kompensiertem Facettenfenster
Airborne optoelectronic identification and location equipment with compensated facet window

(30) Priorité: 15.12.1989 FR 8916615
(43) Date de publication de la demande: 19.06.1991
(73) Titulaire: THOMSON-CSF, 75008 Paris (FR)
(72) Inventeur: Audion, Marc, F-92045 Paris La Defense (FR); Pepin, Christian, F-92045 Paris La Defense (FR)
(74) Mandataire: Lincot, Georges

(56) Documents cités:
- GB-A- 2 104 237
- US-A- 4 614 405

## Description

L'invention se rapporte au domaine des équipements optoélectroniques aéroportés, notamment à bord d'avions d'arme, pour l'identification et la localisation tridimensionnelle, et plus particulièrement aux équipements de ce type disposant de hublots à facettes.

Classiquement, sur un avion d'arme, on utilise un équipement optoélectronique d'identification et/ou de localisation tridimensionnelle qui comporte un hublot de protection de la caméra constituée d'un dispositif optique associé à un capteur optique et à des moyens de traitement du signal issu du capteur. Ce hublot peut prendre diverses formes selon le besoin, sphérique, plan, ou à facettes, c'est-à-dire formé par la juxtaposition de plans inclinés les uns par rapport aux autres.

La forme sphérique est généralement utilisée pour son profil aérodynamique et parce qu'elle autorise de grands débattements de la ligne de visée (LDV). De plus cette forme présente l'avantage d'une bonne résistance aux pressions aérodynamiques. Cependant, en raison de la puissance optique d'un hublot de forme sphérique, celui-ci doit être solidaire de la combinaison optique de la caméra : l'axe optique du hublot doit rester aligné avec celui du dispositif optique de l'équipement optoélectronique, quel que soit l'environnement mécanique et climatique, pour ne pas dégrader la qualité d'image. Un tel hublot sphérique ne convient pas lorsque la mécanique impose une ligne de visée hors d'axe.

La forme plane du hublot permet d'éviter cet inconvénient et permet notamment de suspendre la caméra par rapport à la structure porteuse du hublot. La nécessité de suspendre la caméra est liée à l'environnement mécanique ; en effet cette caméra est généralement associée à un dispositif d'orientation de la ligne de visée, stabilisé par rapport au repère lié au sol afin d'obtenir une image de la scène extérieure "stable" pour les yeux du pilote dans le cas de systèmes aéroportés. Le hublot plan n'a pas de puissance optique et par conséquent est neutre et permet un déplacement du dispositif d'orientation par rapport au hublot sans incidence sur la qualité de l'image. Cependant le hublot plan présente l'inconvénient de limiter le domaine de débattement de la ligne de visée pour deux raisons principales liées à une limitation nécessaire de la taille du hublot plan pour des considérations aérodynamiques d'une part, et en raison de l'angle limite de Brewster d'autre part.

Une solution classiquement utilisée pour augmenter les angles de débattement avec un hublot plan consiste à rendre le hublot mobile autour d'un ou de deux axes de rotation, au moyen d'un capot suiveur :
- Avec un capot suiveur "un axe", le hublot plan conserve un angle constant avec la direction de la ligne de visée lorsque celle-ci subit une rotation autour d'un axe. Le dispositif d'orientation de la ligne de visée est généralement mobile autour de deux axes orthogonaux (site et gisement). Le capot suiveur "un axe" autorise par conséquent un débattement angulaire de la ligne de visée important autour d'un seul axe tout en permettant au champ optique de traverser en permanence un hublot plan unique. Par contre le débattement angulaire de la ligne de visée selon l'autre axe est plus limité.
- Avec un capot suiveur "deux axes", le hublot plan est cette fois porté par une structure mobile selon deux axes de rotation (site et gisement) permettant au champ optique de traverser en permanence un hublot plan unique quelle que soit la direction de la ligne de visée. Ceci autorise de grands débattements angulaires selon les 2 axes (site et gisement).

Le capot suiveur est un hublot mobile ne modifiant en rien le principe et la structure du dispositif d'orientation de la ligne de visée de l'équipement optoélectronique. Ce dernier reste protégé par le hublot "suiveur" des effets aérodynamiques. Ceci est très important pour la qualité de stabilisation de la ligne de visée. Cependant une autre solution consiste à faire porter le hublot plan par le dispositif d'orientation de la ligne de visée, ce qui présente l'avantage de réduire la motorisation (nombre de moteurs à asservir) et l'encombrement lorsque les performances de stabilisation ne sont pas prioritaires et peuvent être de qualité inférieure.

Ces dispositifs ne permettent pas d'associer simplicité, encombrement et performances tout à la fois. Les capots suiveurs requièrent:
- un dispositif d'asservissement propre (moteur, commande, recopie)
- un encombrement plus important avec augmentation du coefficient de pénétration dans l'air,
- des conditions d'étanchéité compatibles avec la rotation, généralement coûteuses compte tenu que les systèmes optoélectroniques requièrent une pressurisation stable quel que soit l'environnement extérieur.

Les capots portés ne conviennent généralement pas non plus pour les systèmes aéroportés, compte tenu des performances, et nécessitent un dispositif d'étanchéité comme les précédents.

La forme à facettes permet de réunir les avantages des deux formes précédentes (sphérique et plane) sans en avoir les inconvénients (à savoir la nécessité de maintenir l'étanchéité en rotation et la nécessité d'une motorisation asservie), en conservant les avantages du hublot fixe, pour un équipement à grand débattement angulaire. Elle autorise :
- les grands angles de débattement de la ligne de visée ;
- la suspension de l'ensemble constitué du dispositif d'orientation de la ligne de visée, du dispositif optique, et du senseur.

Par contre la forme à facettes présente l'inconvénient, pour un hublot d'équipement optoélectronique aéroporté, de dédoubler l'image de la cible à identifier en haute altitude, ceci lorsque le champ de la caméra intercepte une jointure entre deux facettes. De plus, dans le cas de l'utilisation d'un télémètre pour la localisation tridimensionnelle (3D), la divergence du faisceau laser se trouve également augmentée dans les mêmes conditions, ce qui affecte les performances de portée du système.

Ce phénomène de dédoublement est appelé "effet de diédre" et est dû à la différence entre les indices des gaz de part et d'autre du hublot provoquée par la différence de pression entre l'intérieur de l'équipement et l'extérieur : L'intérieur de l'équipement doit être maintenu à une pression constante pour ne pas modifier les caractéristiques de l'optique tandis que l'extérieur du hublot subit les variations de pression atmosphérique avec l'altitude.

L'invention a pour objet un équipement optoélectronique à grande résolution permettant
- de grands angles de débattement de la ligne de visée
- une suspension du banc optique,

en utilisant un hublot à facettes compensé pour supprimer l'effet de dièdre tout en conservant une pression constante à l'intérieur du dispositif optique et donc en conservant les qualités optiques de l'équipement.

De plus le dispositif de mise en oeuvre de l'objet de l'invention ne requiert pas un lieu d'implantation particulier ce qui assouplit la conception de l'ensemble.

Selon l'invention, un équipement optoélectronique aéroporté, d'identification et/ou de localisation comportant un hublot à facettes, un dispositif d'orientation de la ligne de visée et un dispositif optique de formation d'image du champ visé caractérisé en ce qu'il comprend un prisme à indice variable formé entre chaque facette latérale et une face plane, et des moyens de commande pour varier l'indice de réfraction du prisme en fonction de l'altitude de l'équipement et de la direction d'orientation de la ligne de visée.

L'invention sera mieux comprise et d'autres caractéristiques apparaîtront à l'aide de la description ci-après faite en regard des figures annexées.
- La figure 1 représente schématiquement, selon deux plans de coupe, un équipement optoélectronique avec hublot à facettes ;
- La figure 2 illustre l'effet de dièdre sur un faisceau parallèle incident sur le hublot à facettes ;
- La figure 3 illustre, selon une première variante de l'invention, un hublot à facettes, compensé par prismes à indice variable ;
- Les figures 4 et 5 illustrent les courbes de variation de la pression nécessaire dans les prismes associés aux facettes latérales en fonction de l'angle de gisement de la ligne de visée pour deux altitudes différentes du porteur, respectivement 20000 et 60000 pieds ;
- Les figures 6 et 7 illustrent deux modes de réalisation du dispositif de commande de l'indice des prismes ;
- La figure 8 illustre, selon une seconde variante de l'invention, un hublot à facettes compensé par équilibrage des pressions de part et d'autre.

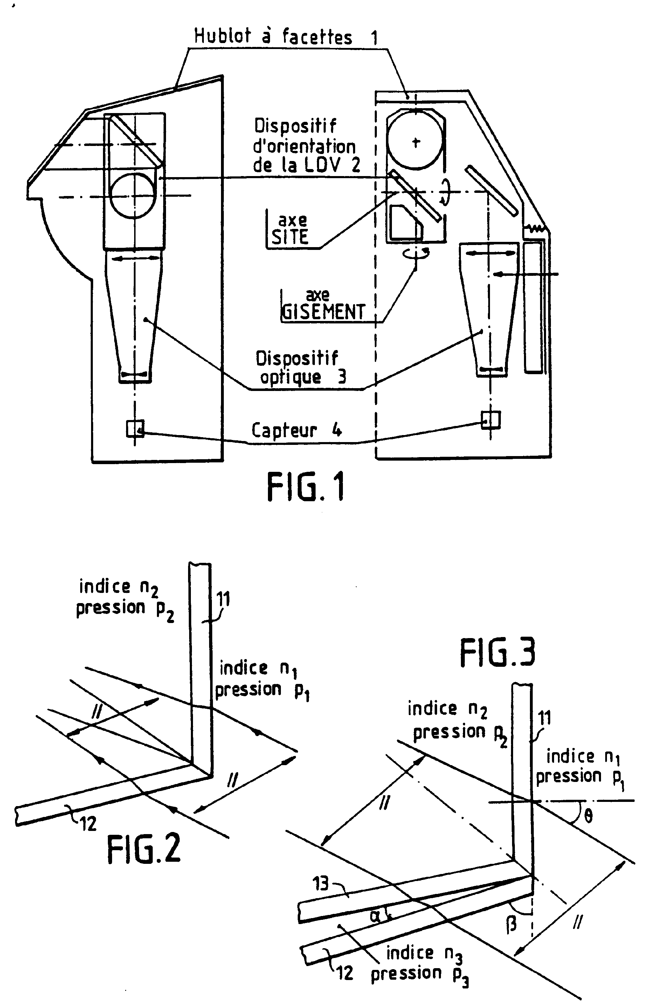

La figure 1 représente l'architecture d'un équipement optoélectronique comportant :
- un hublot à facettes planes, 1,
- un dispositif d'orientation de la ligne de visée, 2,
- un dispositif optique 3 généralement à grande focale, F,
- un capteur optique 4, qui associé au dispositif optique, donne une grande résolution angulaire, de l'ordre d'une dizaine de »rd.

La figure 2 illustre l'effet de dièdre du hublot à facettes lorsque le champ passe par une arête entre deux facettes du hublot. La facette frontale 11 reçoit une partie du champ qui émerge à l'intérieur du dispositif d'orientation selon un faisceau parallèle d'autant plus dévié par rapport à la direction d'entrée que l'indice à l'intérieur du dispositif, n₂, est plus différent de l'indice à l'extérieur, n₁ .

De même, la facette latérale 12 reçoit l'autre partie du champ qui émerge à l'intérieur du dispositif d'orientation de la ligne de visée selon un faisceau parallèle, d'autant plus dévié par rapport à la direction d'entrée que l'indice à l'intérieur du dispositif n₂ est plus différent de l'indice n₁ à l'extérieur :

Lorsque l'avion est au sol, les pressions intérieure et extérieure étant identiques, les indices sont égaux et le faisceau n'est pas dévié ; les deux parties du flux transmises par les deux facettes émergent parallèles et il n'y a pas de dédoublement de l'image.

Par contre, lorsque l'avion monte en altitude la pression diminue à l'extérieur tandis qu'elle est maintenue constante à l'intérieur ; en conséquence l'image se dédouble à l'intérieur du dispositif d'orientation de la ligne de visée. Si la répartition du flux entre les deux facettes est telle que l'une des deux facettes en reçoit la plus grande partie, l'effet n'est pas trop sensible, mais si le flux est partagé de manière suffisante, l'effet devient très sensible, et d'autant plus sensible que l'altitude est élevée.

L'invention propose de rendre un hublot à facettes équivalent à un hublot plan sans modifier sa géométrie externe.

Selon une première solution, l'invention utilise des prismes à indice variable en lieu et place des facettes latérales du hublot à facettes de manière à rendre les rayons émergeant des faces latérales parallèles à ceux émergeant de la face frontale. Pour cela l'indice du prisme est asservi en fonction :
- de l'angle de la direction de la ligne de visée
- des températures extérieure et intérieure
- de l'altitude du porteur

Dans une première variante, la méthode d'obtention du prisme à indice variable consiste à réaliser un volume prismatique entre deux lames à faces parallèles formant un angle entre elles correspondant à l'angle au sommet du prisme et de remplir ce volume par de l'air ou tout autre gaz à pression variable et contrôlée.

La figure 3 illustre, selon une première variante de l'invention, une méthode de compensation de l'effet de dièdre créé par le hublot à facettes lors des variations d'altitude du porteur. Elle met en oeuvre un prisme formé entre la facette plane 12 et une seconde facette plane 13 inclinée d'un angle α. Ce prisme a un indice variable n₃ par variation de la pression de gaz dans cette cavité. La loi de variation de l'indice, et donc de la pression imposée au gaz, dépend de paramètres variables :
- inclinaison du rayon incident ϑ par rapport au hublot, la facette frontale étant prise comme référence, donc de l'orientation de la ligne de visée,
- indices n₁ et n₂ et donc
   . température et pression internes
   . température et pression externes donc altitude et température externe ;

Elle dépend aussi des caractéristiques de l'équipement et notamment de la géométrie du hublot :
. angles d'inclinaison des facettes par rapport à un plan de référence, ou angle β du dièdre formé par la facette frontale et une facette latérale ;
. angle au sommet α du prisme correcteur.

Le calcul de la loi de variation vise à faire en sorte que les angles de la direction de la ligne de visée, en site et en gisement, varient de la même manière pour la partie de flux incidente sur la facette frontale et pour la partie de flux incidente sur la facette latérale lorsque le flux passe de l'extérieur de l'avion à l'intérieur du dispositif optique de visée.

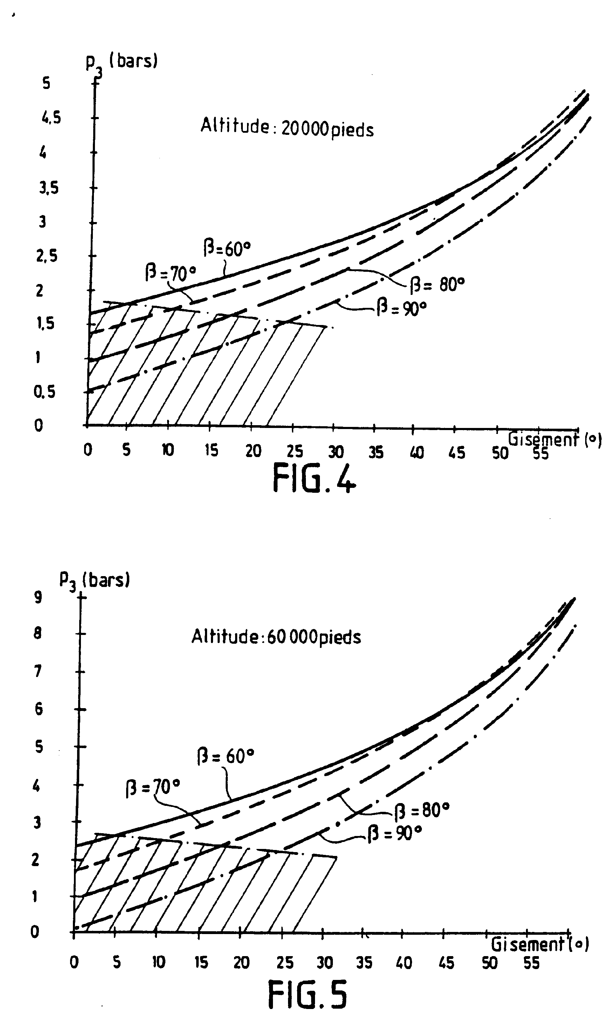

Les figures 4 et 5 illustrent, pour un mode de réalisation, les courbes de variation de la pression nécessaire dans le prisme associé aux facettes latérales du hublot, en fonction de l'angle de gisement ϑ de la ligne de visée et pour deux altitudes différentes du porteur.

Sur la figure 4 qui illustre la variation de pression pour une altitude du porteur de 20000 pieds, plusieurs courbes ont été représentées, selon l'angle β du dièdre formé par la facette frontale et la facette latérale (β = 60°, 70° 80°, 90°).

Pour β = 60°, un angle de gisement de la ligne de visée de 45°, et un angle au sommet du prisme α = 10°, la pression p₃ à l'intérieur du prisme doit être portée à 3.5 bars pour que l'image ne soit pas dédoublée.

Sur la figure 5 qui illustre la variation de pression pour une altitude du porteur de 60000 pieds, plusieurs courbes ont également été représentées selon les angles du dièdre formé par les facettes: β = 60°, 70°, 80°, 90°. Pour β = 60°, un angle de gisement de la ligne de visée de 45° et un angle au sommet du prisme de α = 10°, la pression p₃ à l'intérieur du prisme doit être portée à un peu plus de 6 bars.

Pour l'obtention de la pression variable dans la cavité, permettant l'ajustement de l'indice n₃, différents moyens sont utilisables notamment un dispositif à compresseur, ou un dispositif à volume variable.

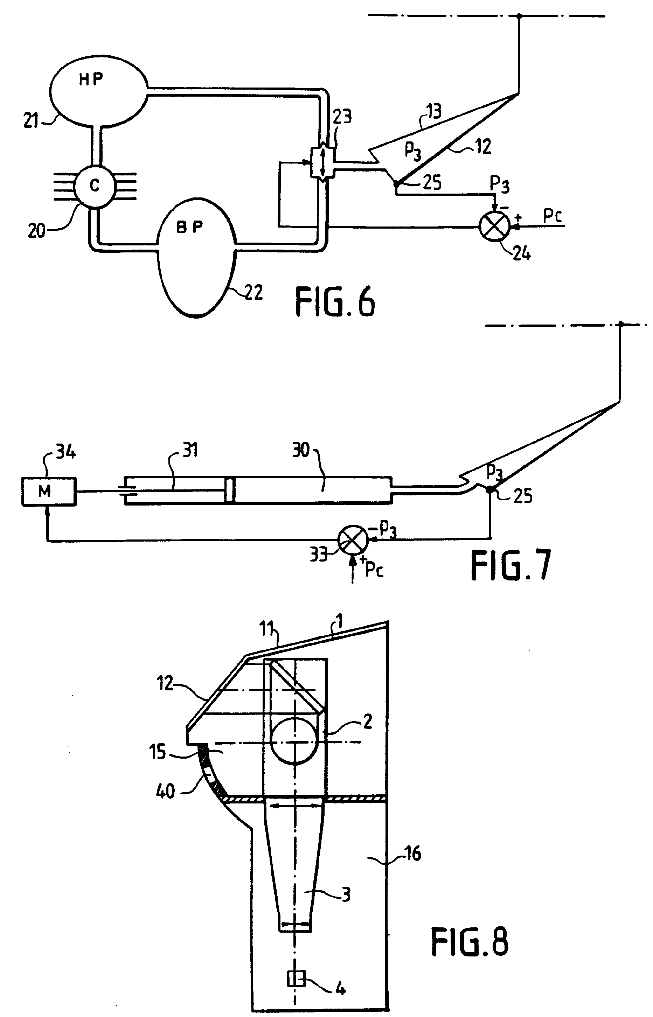

Le premier mode de réalisation des moyens de commande de la variation de pression dans le prisme est représenté sur la figure 6. C'est un dispositif constitué d'un compresseur 20, d'un réservoir haute pression (HP), 21, d'un réservoir basse pression (BP), 22, et d'une électrovanne à double effet 23. Le compresseur maintient dans le réservoir haute pression une pression supérieure à la pression nécessaire dans le prisme (6 à 8 bars) et dans le réservoir basse pression une pression de l'ordre du bar, voire inférieure. L'électrovanne double effet est asservie sur la pression p₃ interne au prisme, mesurée par un capteur de pression 25, en équilibrant haute pression et basse pression afin d'atteindre la valeur de consigne pc calculée à partir des paramètres précédemment décrits. Pour cela un circuit 24 calcule la pression différentielle entre la pression p₃ à l'intérieur du prisme et la pression de consigne calculée pc et commande l'électrovanne 23. Sur cette figure, seul l'un des deux prismes a été représenté. En pratique, la ligne de visée détermine la facette latérale recevant le champ et dont il est nécessaire de commander une correction de la déviation. En conséquence le même dispositif de commande pression peut être utilisé pourvu qu'il soit prévu une jonction entre la sortie de l'électrovanne et les deux prismes. Le dispositif peut également être doublé si son encombrement ne dépasse pas le volume permis.

Le second mode de réalisation représenté sur la figure 7 est un dispositif constitué d'une chambre de compression 30 et d'un piston de variation de volume 31. Le principe repose sur la commande d'une simple variation de volume générant une variation de pression inversement proportionnelle, la chambre communiquant avec la cavité du prisme. La variation de volume nécessaire est de l'ordre de 0 à 6 fois le volume de la cavité 3 du prisme. Ce principe peut être utilisé lorsque le volume de la cavité est faible. La pression p₃ mesurée par le capteur de presion 25 à l'intérieur du prisme est comparée à la pression de consigne dans un comparateur 33 dont la sortie est reliée à un moteur 34 permettant d'actionner le piston.

Selon une deuxième solution, variante de l'invention, la compensation de l'effet de dièdre est obtenue non plus par un prisme mais en équilibrant la pression de part et d'autre du hublot. Dans ce cas les indices extérieur et intérieur sont égaux et les rayons émergeant de chacune des facettes restent parallèles.

Pour cela, le dispositif optique ne pouvant tolérer de variation de pression, la variation de pression est appliquée dans la zone derrière le hublot comprenant le dispositif d'orientation de la ligne de visée. Ceci impose le fait qu'il n'y ait pas de puissance optique à l'intérieur du dispositif d'orientation de la ligne de visée. De plus il est nécessaire de prévoir une étanchéité entre cette zone dont la pression varie avec la pression extérieure, et la zone du dispositif optique dans laquelle la pression doit être maintenue constante.

Ces conditions étant remplies, il est nécessaire de disposer d'un air sec et propre au niveau de la zone dépressurisée ceci en raison des miroirs, mécanismes et motorisations nécessaires au dispositif d'orientation de la ligne de visée. Selon un mode de réalisation représenté sur la figure 8, l'équipement comporte un dispositif échangeur d'air, muni d'un dessicateur, permettant à un équipement de "respirer" en donnant l'air de l'équipement lorsque la pression extérieure est inférieure à la pression interne de l'équipement, le phénomène s'inversant dans le cas contraire. L'avantage de ce dispositif est de régénérer automatiquement un dessicateur effectuant l'assèchement nécessaire de l'air entrant dans l'équipement. Le dispositif est produit par la société DACO aux Etats-Unis. Sur la figure 8 l'équipement représenté comporte une séparation transparente et étanche entre la zone 15 située à l'arrière du hublot à facettes 1 et comportant le dispositif d'orientation de la ligne de visée 2 qui ne comporte du point de vue optique que des miroirs plans, et la zone 16 du dispositif optique 3 maintenue à pression constante. Sur la paroi de la zone 15 est installé le dispositif échangeur d'air, 40, qui équilibre la pression à l'intérieur de la zone 15 et la pression externe. Ainsi le faisceau parallèle à l'extérieur reste parallèle après son passage au travers du hublot à facettes, quelle que soit l'altitude du porteur. Au lieu d'être placé directement sur la paroi de la zone 15, le dispositif échangeur d'air 40 peut être déporté et relié par un tube souple communiquant avec l'intérieur du hublot.

L'invention n'est pas limitée aux modes de réalisation précisément décrits et représentés.

En particulier les prismes formés sur les facettes latérales du hublot à facettes ont été décrits ci-dessus comme des cavités remplies d'un gaz dont on fait varier la pression, et donc l'indice du prisme. Cette disposition n'est pas limitative. Il serait tout à fait possible d'utiliser un prisme constitué d'un matériau à indice variable s'il s'en trouve ayant des qualités optiques convenables, transparence notamment, et dans la mesure où la variation d'indice commandable, électriquement par exemple, est suffisante pour permettre la correction de l'effet décrit ci-dessus. La plupart des matériaux d'indice variable ne sont en général pas assez transparents et sont polarisés ce qui fait qu'ils ne laissent passer que la moitié du flux.

Tant pour la gamme de variation que pour la vitesse de variation, bien qu'il ne soit pas nécessaire de suivre exactement toutes les variations de ligne de visée ou d'altitude du porteur, quelles que soient leurs amplitudes, il est nécessaire de choisir les différents moyens en fonction de la gamme de variation d'indice.

L'objectif étant la qualité de l'image finale, il est possible de tolérer de petites variations sans les corriger, ou de ne commander la correction que lorsque la variation d'indice à commander, c'est-à-dire la variation de pression dépasse un certain seuil.

De même la valeur de consigne peut être modifiée par paliers, car il n'est pas nécessaire de maintenir les indices intérieur et extérieur à des valeurs strictement identiques; de petits écarts peuvent parfaitement être tolérés s'ils n'ont pas une incidence gênante sur la qualité d'image.

Enfin la vitesse de la correction n'est pas non plus un critère essentiel: la ligne de visée peut être amenée à varier rapidement (1 radian par seconde par exemple) si une zone différente est pointée, ce qui pourrait nécessiter une variation de pression de 6 bars à l'intérieur du prisme. Mais cette variation n'a pas besoin de suivre au plus près la variation de ligne de visée. Elle peut tout à fait intervenir avec un certain retard.

Par ailleurs en ce qui concerne le choix de l'angle au sommet des prismes, α égal à 10° dans l'exemple donné ci-dessus, sa valeur peut être modifiée, soit pour être compatible avec les variations de pression possibles du fait des contraintes imposées par les moyens de commande de variation de pression, soit pour augmenter la gamme possible de variation. Ainsi un angle au sommet du prisme α = 10° peut correspondre à une variation de pression de 6 bars entre 0 et 60000 pieds d'altitude par exemple, tous autres paramètres étant maintenus constants (par exemple la ligne de visée), alors qu'un prisme d'angle au sommet 5° nécessiterait pour la même variation d'altitude du porteur une variation de pression de 20 bars par exemple.

Il est également possible de ne corriger que lorsque par exemple plus de 20% du flux du champ de visée passe par l'une des facettes latérales ; en effet, au dessous de ce seuil, la majeure partie du flux passant par la facette frontale, l'image formée à partir de cette partie du flux n'est pas dédoublée de manière significative du fait de l'autre partie du flux émergeant selon une direction différente.

L'invention n'est pas non plus limitée à des hublots comportant 3 facettes mais est applicable quel que soit leur nombre.

## Revendications

1. Equipement optoélectronique aéroporté, d'identification et/ou de localisation comportant un hublot à facettes (1), un dispositif d'orientation de la ligne de visée (2) et un dispositif optique de formation d'image du champ visé (3, 4), caractérisé en ce qu'il comprend un prisme à indice variable formé entre chaque facette latérale (12) et une face plane (13), et des moyens de commande pour varier l'indice de réfraction du prisme en fonction de l'altitude de l'équipement et de la direction d'orientation de la ligne de visée.

2. Equipement selon la revendication 1, caractérisé en ce que les prismes à indice commandable sont des cavités remplies de gaz, associées à des moyens de commande de la pression à l'intérieur des cavités, et en ce que des moyens de détermination de la variation d'indice commandent la transmission d'une pression de consigne (P_{c}) à un comparateur recevant par ailleurs la valeur de pression (P₃) dans le prisme, la sortie du comparateur étant reliée aux moyens de commande de variation de la pression.

3. Equipement selon la revendication 2, caractérisé en ce que les moyens de commande de variation de la pression comportent un compresseur (20) relié à deux réservoirs respectivement haute et basse pression (21, 22) couplés à une électrovanne double effet (23), elle-même couplée aux cavités formant prismes à indice variable.

4. Equipement selon la revendication 2, caractérisé en ce que les moyens de commande de variation de la pression comportent une chambre (30) associée à un piston (31) et couplée à la cavité des prismes, un comparateur de la pression de consigne et de la pression à l'intérieur du prisme, la sortie du comparateur (33) commandant un moteur (34) couplé au piston (31) pour faire varier le volume et donc la pression dans la chambre et les cavités des prismes.

5. Equipement optoélectronique aéroporté, d'identification et/ou de localisation d'un champ visé, l'équipement comportant un hublot à facettes (1) comportant au moins une facette frontale et une facette latérale plane (12) inclinée par rapport à la facette frontale, un dispositif optique (3, 4) de formation d'image du champ visée à travers le hublot (1), un dispositif (2) d'orientation de la ligne de visée, caractérisé en ce que le dispositif (2) d'orientation de la ligne de visée n'a pas de puissance optique et est séparé du dispositif optique (3, 4) de formation d'image par un hublot étanche et transparent, et par un échangeur d'air communiquant avec l'intérieur du hublot, cet échangeur permettant de maintenir la pression et donc l'indice de réfraction à l'intérieur du dispositif d'orientation égal à l'indice extérieur.

## Patentansprüche

1. An Bord eines Luftfahrzeugs befindliche optoelektronische Vorrichtung zur Identifizierung und/oder Ortung, mit einem Facettenfenster (1), einer Vorrichtung (2) zur Ausrichtung der Visierlinie sowie einer optischen Vorrichtung (3, 4) zur Bildung eines Abbildes des Sichtfeldes, dadurch gekennzeichnet, daß sie ein Prisma mit variablem Brechungsindex enthält, welches zwischen jeder seitlichen Facette (12) und einer ebenen Fläche (13) gebildet ist, sowie Steuermittel zum Variieren des Brechungsindexes des Prismas in Abhängigkeit von der Höhe der Vorrichtung und der Richtung der Ausrichtung der Visierlinie.

2. Vorrichtung nach Anspruch 1, dadurch gekennzeichnet, daß die Prismen mit steuerbarem Brechungsindex mit Gas gefüllte Hohlräume sind, die mit Steuermitteln für den Druck im Inneren dieser Hohlräume verbunden sind, und daß Mittel zur Bestimmung der Veränderung des Brechungsindexes das Übertragen eines Solldruckes (P_{c}) an einen Vergleicher steuern, der außerdem den Wert des Druckes (P₃) in dem Prisma empfängt, wobei der Ausgang des Vergleichers mit den Steuermitteln zur Druckveränderung verbunden ist.

3. Vorrichtung nach Anspruch 2, dadurch gekennzeichnet, daß die Steuermittel zur Druckveränderung einen Kompressor (20) enthalten, der mit zwei Vorratsbehältern (21, 22), nämlich einem Hochdruckvorratsbehälter und einem Niederdruckvorratsbehälter, verbunden ist, die mit einem doppelt wirkenden Elektroventil (23) verbunden sind, welches wiederum mit den die Prismen mit variablem Brechungsindex bildenden Hohlräumen verbunden ist.

4. Vorrichtung nach Anspruch 2, dadurch gekennzeichnet, daß die Steuermittel zur Druckveränderung eine Kammer (30) aufweisen, die einem Kolben (31) zugeordnet und mit den Hohlräumen der Prismen gekoppelt ist, sowie einen Vergleicher für den Solldruck und den Innendruck des Prismas, wobei der Ausgang des Vergleichers (33) einen mit dem Kolben (31) gekoppelten Motor (34) steuert, um das Volumen und damit den Druck in der Kammer und den Hohlräumen des Prismas zu verändern.

5. An Bord eines Luftfahrzeugs befindliche optoelektronische Vorrichtung zur Identifizierung und/oder zur Ortung eines anvisierten Feldes, wobei die Vorrichtung ein Facettenfenster (1) mit wenigstens einer Stirnfacette und einer ebenen Seitenfacette (12) aufweist, die bezüglich der Stirnfacette geneigt ist, sowie eine optische Vorrichtung (3, 4) zur Bildung des Abbildes des anvisierten Feldes durch das Fenster (1), und eine Vorrichtung (2) zur Ausrichtung der Visierlinie, dadurch gekennzeichnet, daß die Vorrichtung (2) zur Ausrichtung der Visierlinie keine Brechkraft aufweist und von der optischen Vorrichtung (3, 4) zur Bildung des Abbildes durch ein dichtes und transparentes Fenster und durch einen Lufttauscher getrennt ist, der mit dem Inneren des Fensters in Verbindung steht, wobei der Lufttauscher ermöglicht, den Druck und damit den Brechungsindex im Inneren der Vorrichtung zur Ausrichtung der Visierlinie gleich dem äußeren Brechungsindex zu halten.

## Claims

1. Airborne optoelectronic equipment for identification and/or location, including a faceted cowl (1), a line of sight orientation device (2) and a viewing field image formation optical device (3, 4), characterized in that it comprises a variable-index prism formed between each lateral facet (12) and a plane face (13), and control means for varying the refractive index of the prism as a function of the altitude of the equipment and of the direction of orientation of the line of sight.

2. Equipment according to Claim 1, characterized in that the controllable-index prisms are gas-filled cavities associated with means for controlling the pressure inside the cavities, and in that means of determining the index variation control the transmission of a set pressure (P_{c}) to a comparator furthermore receiving the value of pressure (P₃) in the prism, the output of the comparator being connected to the pressure variation control means.

3. Equipment according to Claim 2, characterized in that the pressure variation control means include a compressor (20) connected to two respectively high and low pressure tanks (21, 22) coupled to a double-action electrovalve (23) itself coupled to the cavities forming variable-index prisms.

4. Equipment according to Claim 2, characterized in that the pressure variation control means include a chamber (30) associated with a piston (31) and coupled to the cavity of the prisms, a comparator of the set pressure and of the pressure inside the prism, the output of the comparator (33) controlling a motor (34) coupled to the piston (31) in order to vary the volume and hence the pressure in the chamber and the cavities of the prisms.

5. Airborne optoelectronic equipment, for identification and/or location of a viewing field, the equipment including a faceted cowl (1) including at least one front facet and one plane lateral facet (12) inclined with respect to the front facet, an optical device (3, 4) for forming an image of the field viewed through the cowl (1), a device (2) for orientation of the line of sight, characterized in that the device (2) for orientation of the line of sight has no optical power and is separated from the optical device (3, 4) for forming an image by a sealed and transparent cowl, and by an air exchanger communicating with the interior of the cowl, this exchanger allowing the pressure and hence the refractive index inside the orientation device to be kept equal to the exterior index.
